# EUROPÄISCHE PATENTSCHRIFT

(11) **EP 1 515 820 B1**
(45) Veröffentlichungstag und Bekanntmachung des Hinweises auf die Patenterteilung: **02.01.2008**
(21) Anmeldenummer: 03759862.0
(22) Anmeldetag: 17.06.2003
(51) Int. Cl.: B23D 51/02

(54) **HAND-HUBSÄGEMASCHINE MIT SÄGEBLATTFÜHRUNGSSYSTEM**
HAND-OPERATED JIG-SAW WITH SAW BLADE GUIDANCE SYSTEM
SCIE A MOUVEMENT ALTERNATIF, PILOTEE A LA MAIN ET MUNIE D'UN SYSTEME DE GUIDAGE DE LAME DE SCIE

(30) Priorität: 17.06.2002 DE 10227058; 27.02.2003 DE 10308828
(43) Veröffentlichungstag der Anmeldung: 23.03.2005
(73) Patentinhaber: ROBERT BOSCH GMBH, 70442 Stuttgart (DE)
(72) Erfinder: DELFINI, Stefano, CH-2544 Bettlach (CH); GERBER, Beat, CH-3427 Utzenstorf (CH); KEUSCH, Siegfried, 73779 Deizisau (DE); VAN DER SCHANS, Cornelius, CH-3400 Burgdorf (CH)
(86) Internationale Anmeldenummer: PCT/DE2003/002021
(87) Internationale Veröffentlichungsnummer: WO 2003/106087

(56) Entgegenhaltungen:
- DE-A- 10 045 890
- DE-U- 29 910 173

## Beschreibung

### Stand der Technik

Die vorliegende Erfindung geht von einer Hand-Hubsäge gemäß Oberbegriff des Anspruchs 1 aus.

Durch die WO 02/22297 ist eine Hand-Hubsäge mit Sägeblattführungssystem bekannt, das zwischen zwei seitlichen Spannbacken die Flachseiten des Sägeblatts führt. Dabei ist die Ansteuerung der Spannbacken mittels Stellmotor vorgeschlagen.

Aus der DE 100 45 890 A ist eine Hand-Hubsägemaschine mit zangenbackenartigen Führungsmitteln zur seitlichen Führung des Sägeblatts bekannt, die nur dann in eine Freigabeposition bewegbar sind, wenn ein Sägeblattwechsel erfolgen soll.

### Vorteile der Erfindung

Die vorliegende Erfindung nach Anspruch 1 hat den Vorteil, dass das Führungssystem wahlweise zu- bzw. abschaltbar ist.

Darüber hinaus haben die sich selbsttätig auf die Position des Sägeblatts einstellenden Spannmittel den Vorteil, dass beide Flachseiten des Sägeblatts mit übereinstimmender minimaler Abstützkraft geführt werden und unerwünscht hohe Reibungskräfte zwischen den Führungsmitteln und dem Sägeblatt vermieden werden.

Dadurch, dass die Führungsmittel elastisch so angeordnet sind, dass sie sich in die am Sägeblatt abstützende aktivierte Position zu stellen suchen, ist in der deaktivierten Position wahlweise eine schlagartige Aktivierung der Führungsmittel möglich, sobald die Arbeitsbedingungen dies erfordern. Dadurch, dass eine Drucktaste angeordnet ist, bei deren Betätigung die Spannmittel in ihre aktivierte, das Sägeblatt abstützende Position gehen, ist die Aktivierung der Führungsmittel besonders bequem möglich.

Dadurch, dass am Sägeblattspannmechanismus ein Betätigungsmittel zum Deaktivieren der Führungsmittel angeordnet ist, sind automatisch die Führungsmittel beim Sägeblattwechsel bzw. bei dessen Lösen deaktiviert.

Dadurch, dass der als Betätigungshebel zum Stellen der Führungszange in die Position "geöffnet" dienende Spannhebel zum Lösen bzw. Einspannen des Sägeblatts mit Keilmitteln, insbesondere einer Rampe versehen ist, mit der der Mitnahmestift gemeinsam mit den Gleitsteinen nach unten verstellbar ist, ist ein zuverlässiges, robustes Stellgetriebe zum Deaktivieren der Führungsmittel geschaffen.

Dadurch, dass zwei Gleitsteine zum Schließen bzw. Öffnen der zangenartigen Führungsmittel relativ zueinander parallel und gerade verschieblich gelagert sind, wobei der eine Gleitstein den anderen in einer Bewegungsrichtung zwangsweise mitnimmt und in entgegengesetzter Bewegungsrichtung unabhängig vom mitgenommenen Gleitstein zurückbewegbar ist, kommen einfache und robuste Maschinenelemente zum Einsatz, die eine hohe Zuverlässigkeit der Hubsäge sichern.

Dadurch, dass federvorgespannte Gleitsteine mit Kulissenführungsschlitzen Nocken der Führungsmittel, insbesondere der Zangenbacken, übergreifen, ist ein einfaches und zuverlässiges Stellgetriebe zum Schließen bzw. Öffnen der Führungszange geschaffen. Dadurch, dass die Gleitsteine so miteinander gekoppelt verschiebbar sind, dass auf ihrem Verschiebeweg ein gewisses Spiel zueinander besteht, ist ein selbstorientiertes Positionieren der Zangenbacken zum Sägeblatt möglich, mit dem Abweichungen der Sägeblattposition von der Ideallage toleriert werden. Dies wird dadurch erreicht, dass ein Mitnahmemittel zwischen dem ersten und dem zweiten Gleitstein angeordnet ist, wobei in der Position "geschlossen" der Führungszange ein axialer Abstand von etwa 0,5 mm zwischen dem Mitnahmemittel und dem zweiten Gleitstein in Verschieberichtung zur Position "geöffnet" besteht.

Dadurch, dass die Kulissenführungsschlitze der Gleitsteine in einem Winkelverlauf zur Senkrechten gegenüber dem Kulissenbolzen der Zangenbacken im Selbsthemmungsbereich, insbesondere 5 bis 6 Grad Neigung zur Senkrechten, angeordnet sind, sind die Spannbacken mit hoher Haltekraft schließbar, sodass die Spannzange durch Kräfte von außen bzw. bei Anliegen des Sägeblatts mit hoher Kraft nicht zu öffnen ist.

Dadurch, dass das Gehäuse einen Fingerschutz trägt, ist die Verletzungsgefahr beim Hantieren mit der Hubsäge deutlich verringert, wobei durch die U-förmige Ausgestaltung des Fingerschutzes das Sägeblatt gut erkennbar ist und kontrolliert führbar ist.

### Zeichnungen

Nachstehend ist die Erfindung anhand eines Ausführungsbeispiels mit zugehörigen Zeichnungen näher erläutert.

### Es zeigen

Figur 1 eine schematische Darstellung eines ersten Ausführungsbeispiels der Erfindung,
Figur 2 eine Seitenansicht eines zweiten Ausführungsbeispiels der Erfindung,
Figur 3 die Baugruppe der Führungsmittel,
Figur 4 einen Querschnitt mit Innenansicht von hinten auf die Führungsmittel,
Figur 5 die Führungsmittel in geschlossener und
Figur 6 die Führungsmittel in geöffneter Position.

### Beschreibung des Ausführungsbeispiels

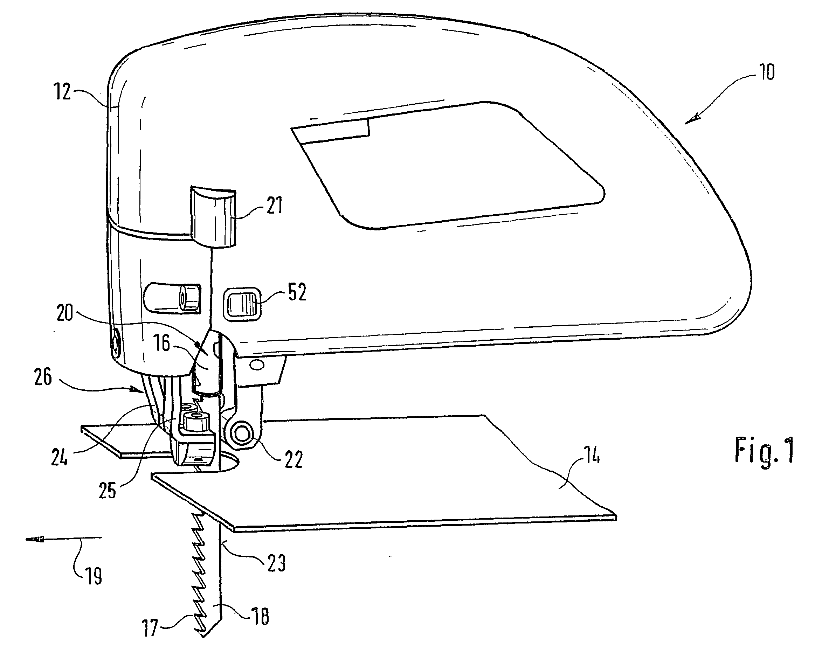

Figur 1 zeigt eine schematisch dargestellte, handgeführte Stichsäge 10 schräg von oben, die in einem Gehäuse 12 einen nicht dargestellten Elektromotor mit einem Getriebe aufnimmt zum hin- und hergehenden Antrieb einer Hubstange 16. An der Hubstange 16 ist mit seinem Einspannende ein Sägeblatt 18 lösbar, aber unverlierbar gekoppelt, das in Betrachtungsrichtung nach unten eine Fußplatte 14 der Stichsäge 10 durchtritt.

An ihrem Sägeblattrücken 23, der der Verzahnungsseite 17 gegenüberliegt, ist das Sägeblatt 18 an einer Stützrolle 22 abgestützt, die in Vorschubrichtung 19 hin- und hergehend pendelnd dem Sägeblatt 18 bedarfsweise zuschaltbar eine Pendelbewegung erteilen kann.

Außerdem erstrecken sich vor der Verzahnungsseite 17 des Sägeblatts 18 oberhalb der Fußplatte 14 als Führungszange 26 ausgestaltete Führungsmittel, die das Sägeblatt 18 an seinen Flachseiten gegenüberliegend abstützen können.

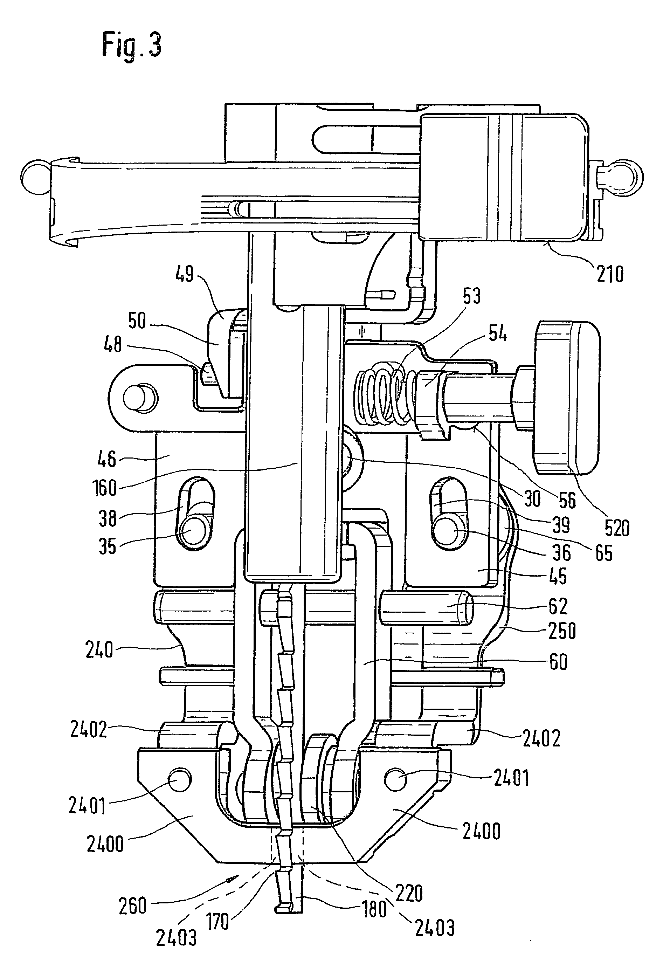

Mittels Federvorspannung ist ein Abstand zwischen Führungsbacken 24, 25 der Führungszange 26 auf die jeweilige Sägeblattstärke des eingespannten Sägeblatts 18 einstellbar. Dabei sind die Führungsbacken 24, 25 um einen Drehpunkt 30 (Figur 3) zwischen der Position geschlossen und der Position geöffnet schwenkbar. In der Stellung geschlossen stützen sich die äußersten Enden der Führungsbacken 24, 25 seitlich an den Flachseiten des Sägeblatts ab.

Das untere Ende der Hubstange 16 ist mit einer Spanneinrichtung 20 versehen, in der das Einspannende des Sägeblatts 18 unverlierbar einspannbar ist und durch Betätigen eines Spannhebels 21 lösbar. Beim Betätigen des Spannhebels 21 wird die Führungszange 26 in die Position geöffnet geschaltet, wobei diese Position wahlweise durch Betätigen einer seitlichen Taste 52 in die Position geschlossen versetzbar ist, in der die Führungsbacken 24, 25 sich seitlich am Sägeblatt 18 abstützen.

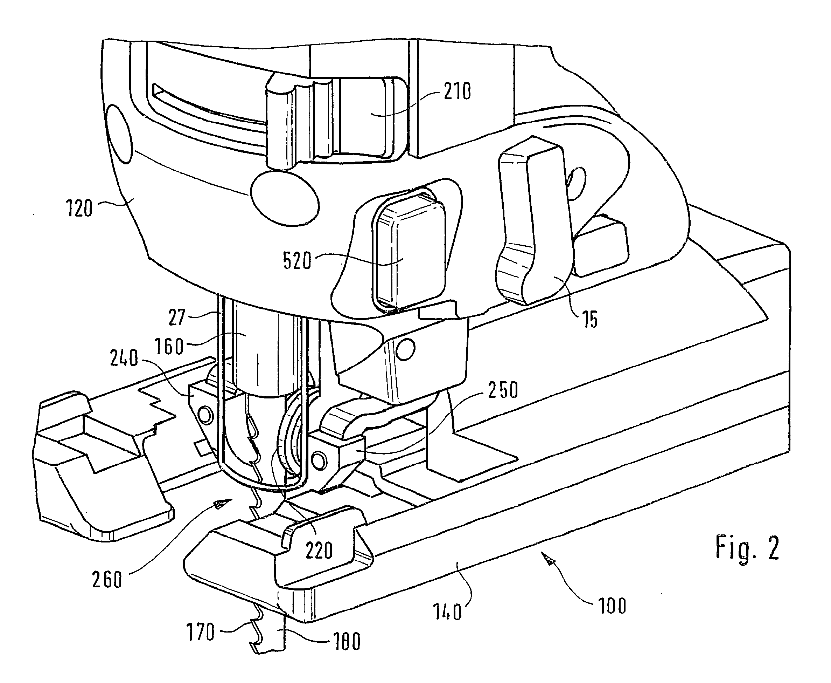

Figur 2 zeigt ein weiteres Ausführungsbeispiel einer Stichsäge 100, die prinzipiell mit der gemäß Figur 1 übereinstimmt, deren Führungszange 260 sich jedoch seitlich der Stützrolle 220 erstreckt und in Betrachtungsrichtung nach rechts abgebogen ist, sodass sie sich hinter der Hubstange 160 ins Innere des Gehäuses 120 erstreckt. In Betrachtungsrichtung vor der Hubstange 160 verläuft parallel zu dieser von oben nach unten am Gehäuse 120 befestigt, ein U-förmiger Schutzbügel 27, der als Fingerschutz gegen ungewolltes Berühren des Sägeblatts 180 dient und den Bedienenden der Stichsäge 100 vor Verletzungen schützt.

Das Gehäuse 120 ist schwenkbar mit einer Fußplatte 120 koppelbar und das Sägeblatt 180 ist seitlich durch Führungsbacken 240, 250 abstützbar. Oberhalb des Austrittsbereichs der Hubstange 160 aus dem Gehäuse 120 ist ein Spannhebel 210 angeordnet, der in Betrachtungsrichtung nach links zum Lösen des Sägeblatts 180 verschwenkbar ist-quer über den Frontbereich des Gehäuses 120. Unterhalb des Bedienhebels 210 ist eine Drucktaste 520 angeordnet, bei deren Betätigung sich die Führungszange 260 schlagartig schließt, um das Sägeblatt 180 seitlich abzustützen.

In Betrachtungsrichtung hinter der Drucktaste 520 ist ein Schwenkhebel 15 zum Einstellen des Pendelhubs der Pendelrolle 220 vorgesehen.

Die zu Figur 1 erläuterten, in Figur 2 gleichwirkend und ähnlich ausgestalteten Funktionselemente haben die gleichen Bezugsziffern wie in Figur 1, jedoch um eine Null am Ende erhöht.

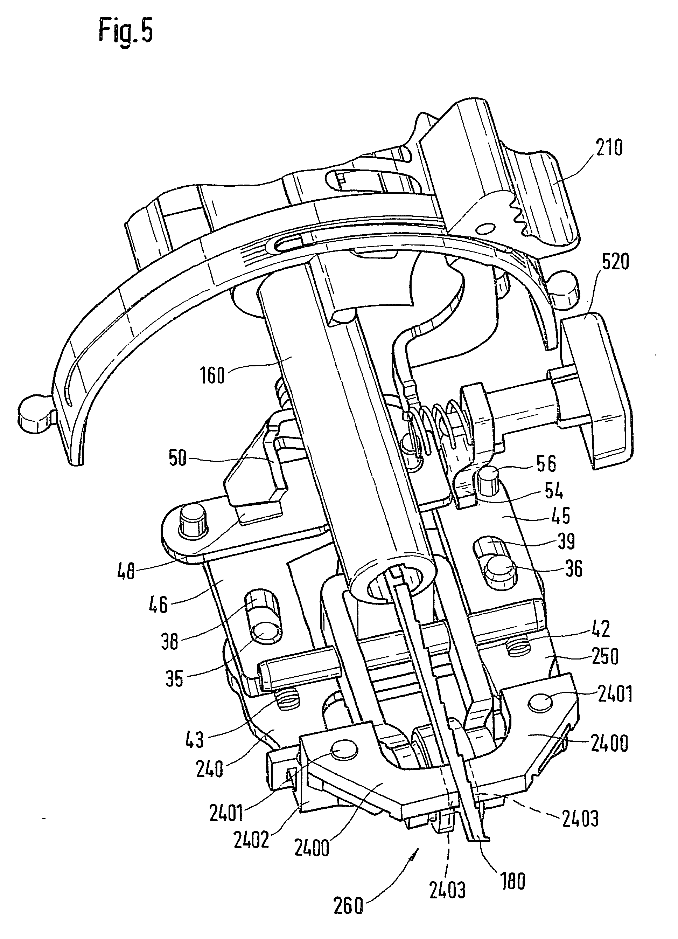

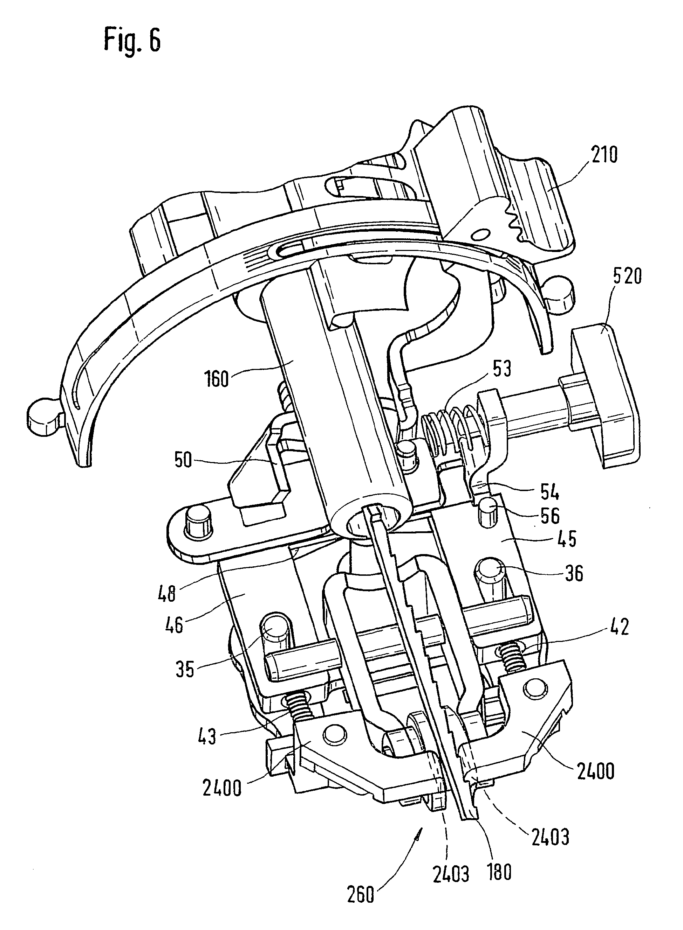

Figur 3 zeigt die Baugruppe der Führungszange 260 in ihrer Lage bezüglich der Hubstange 160 und der Pendelrolle 220. Dabei wird deutlich, dass sich die Führungsbacken 240, 250 von der Verzahnungsseite 170 des Sägeblatts 180 nach hinten zur Pendelrolle 220 hin waagerecht abgebogen erstrecken und wieder senkrecht nach oben abgebogen am Drehpunkt 30 gehäusefest angelenkt sind. Die Führungsbacken 240, 250 tragen jeweils einen sich aus der Betrachtungsebene heraus nach vorn erstreckenden Kulissenbolzen 35, 36, der je einen Kulissenführungsschlitz 38, 39 zweier Gleitsteine 45, 46 durchtritt, die nach oben bzw. nach unten links geführt verschiebbar sind. Die Kulissenführungsschlitze 38, 39 verlaufen um etwa 5 Grad geneigt zur Senkrechten bzw. zur Achse der Hubstange 160, sodass bei in Betrachtungsrichtung nach oben geschobenen Gleitsteinen 45, 46 die Kulissenbolzen 35, 36 nach außen verschoben sind und bei dieser Verschiebung die Führungsbacken 240, 250 öffnend nach außen schwenken. Werden die Kulissensteine 45, 46 nach unten geschoben, nehmen die Kulissenführungsschlitze 38, 39 die Kulissenbolzen 35, 36 aufeinanderzubewegend mit, sodass sich die Führungszange 260 schließt und die unteren Enden der Führungsbacken 240, 250 seitlich am Sägeblatt 180 abstützen. Die Kulissensteine 45, 46 sind durch Druckfedern 42, 43 (Figur 5, 6) elastisch vorgespannt und suchen die Gleitsteine 45, 46 axial nach oben zu drücken.

Die Drucktaste 520 trägt in axialer Verlängerung einen Schieber 54, der sich an einem Nocken 56 im oberen Bereich des Gleitsteins 45 zur Drucktaste 520 hin erstreckt. In Figur 3 ist die Drucktaste 520 in Betrachtungsrichtung nach links verschoben, wobei sie sich gegen eine Druckfeder 53 abstützt und ihren Schieber 54 gegenüber dem Nocken 56 in Freigabeposition verschoben hat. Dadurch kann der Gleitstein 45 schlagartig in seine nach oben gerichtete Position verschoben werden, wobei er den in seiner nach unten gedrückten Position mit seinem Mitnahmestift 48 nach unten gedrückten zweiten Gleitstein 46 freigibt. Durch Schwenken des Stellhebels 210 in Betrachtungsrichtung nach links wird ein starr mit diesem gekoppelter, eine Rampe 50 tragender Arm etwa mittig um die Achse der Hubstange 160 verdreht, wobei der Mitnahmestift 48 und die beiden Gleitsteine 45, 46 nach unten gedrückt werden. Dabei gelangt der Schieber 54 in eine Arretierposition gegenüber dem Nocken 56, sobald dieser gemeinsam mit dem Gleitstein 45 nach unten verschoben ist. Damit gibt der zuvor den Schieber 54 in seiner geschlossenen Position haltende Nocken 56 den Schieber 54 wieder frei, sodass die Drucktaste 520 durch die Druckfeder 53 vorgespannt wieder in ihre Position geöffnet verschiebbar ist, in der der Nocken 56 durch den Schieber 54 in vertikaler Bewegungsrichtung verriegelt ist.

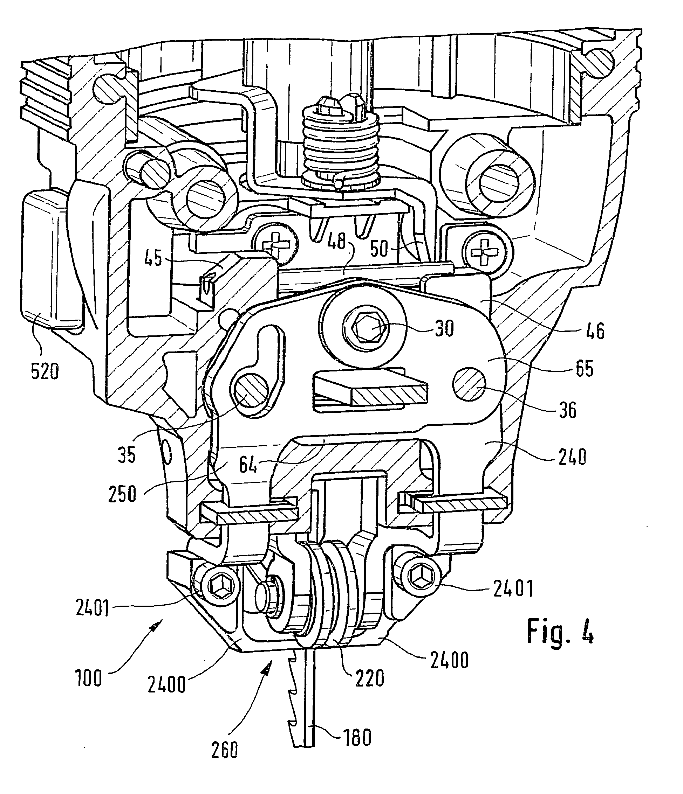

Figur 4 zeigt einen Querschnitt der Stichsägemaschine 100 im Bereich der Führungszange 260 von hinten gesehen, wobei der Drehpunkt 30 der Führungsbacken 240, 250 besonders deutlich erkennbar ist und durch einen Schraubbolzen gebildet wird. Die durch die Führungsbacken 240, 250 zum Teil überdeckten Gleitsteine 45, 46 sind in ihrer Position vertikal nach oben verschoben, sodass sich die Führungszange 240 in der Position geschlossen befindet. Dabei hat die Rampe 50 den Mitnahmestift 48 freigegeben und mit diesem den in Betrachtungsrichtung linken Gleitstein 45, dem der kürzere Gleitstein 46 folgt. Im längeren Gleitstein 45 ist in einer nicht näher bezeichneten Bohrung quer zu dessen Verschieberichtung der Mitnahmestift 48 unverlierbar eingepresst, wobei er mit seinem freien Ende in eine nutartige, nicht näher bezeichnete Vertiefung in der oberen Stirnseite des kürzeren Gleitsteins 46 zum Teil eintaucht.

Die Drucktaste 520 verharrt in ihrer nach innen gedrückten Position, solange der Gleitstein 45 in seiner vertikal obersten Position sitzt. Dabei sind die Kulissenbolzen 35, 36, deren Rückansicht bei den Führungsbacken 240, 250 sichtbar ist, aufeinander zu verschwenkt, sodass die Führungszange 260 in der Position geschlossen ist.

Figur 5 zeigt die Führungszange 260 in ihrer Position geschlossen, in der die Gleitsteine 45, 46 nach oben verschoben sind und der Nocken 56 den Schieber 54 arretiert, sodass die Drucktaste 520 axial nach innen gedrückt bleibt. Soweit der Spannhebel 210 in Betrachtungsrichtung nach links verschwenkt wird, gleitet die Rampe 50 keilartig auf den Mitnahmestift 48 auf, sodass wie zuvor beschrieben, die Gleitsteine 45, 46 in Betrachtungsrichtung nach unten verschoben und die Spannzange geöffnet wird.

Figur 6 zeigt die Führungszange 260 gemäß Figur 5 in der Position geöffnet, weil die Gleitsteine 45, 46 vertikal nach unten verschoben sind entgegen den Druckfedern 42, 43 und dabei die Kulissenbolzen 35, 36 und damit die Führungsbacken 240, 250 voneinander wegspreizen. Dabei ist der Nocken 56 in Betrachtungsrichtung rechts an dem Schieber 54 vorbeigeglitten und hat diesen gegen die Vorspannkraft der Druckfeder 53 freigegeben, sodass sich die Drucktaste 520 in Betrachtungsrichtung nach rechts in die Position geöffnet verschieben konnte. In dieser Position ist der Schieber 54 oberhalb vom Nocken 56 positioniert und sperrt diesen bzw. den Gleitstein 45 in Bewegungsrichtung nach oben. Da sich der Gleitstein 45 mit seinem Mitnahmestift 48 oben auf dem benachbarten Gleitstein 46 abstützt, muss dieser Gleitstein 46 der Bewegung des Mitnahmestifts 48 nach unten, beaufschlagt durch die Rampe 50, folgen. In der Position geschlossen gemäß Figur 4 hat der Mitnahmestift 48 gegenüber dem Gleitstein 46 einen senkrechten Abstand von etwa 0,5 mm, sodass der Mitnahmestift 48 zunächst um diesen Betrag nach unten gedrückt werden muss, ehe der Gleitstein 46 beaufschlagt wird und der Bewegung folgen kann. Dies hat zur Folge, dass in der Position geschlossen sich frei innerhalb eines bestimmten Toleranzbereiches auf Mittenablagen des Sägeblatts 180 einstellen können. Ist das Sägeblatt 180 infolge Mittenablage näher benachbart zur Führungsbacke 240, so wird sich zunächst diese, verschoben durch den Gleitstein 46 bzw durch den Kulissenbolzen 35, seitlich an das Sägeblatt 180 anlegen, sodass die benachbarte Führungsbacke 250, verstellt durch den freien nach oben bewegbaren längeren Gleitstein 45 etwas später zur Anlage an die Seite des Sägeblatts 180 gelangt. Infolge der Selbsthemmung im Kulissenführungsschlitz 38, 39 sind die Kulissenführungsbolzen 35, 36 in der Verriegelungslage positioniert und die Führungsbacken 240, 250 können nicht nach außen, in die Position geöffnet der Führungszange 260 bewegt werden. Gelangt infolge Schieflage des Sägeblatts 180 als erstes die Führungsbacke 250 seitlich an das Sägeblatt 180 infolge der Aufwärtsbewegung des Gleitsteins 45 und der Kulissenverschiebung des Kulissenstifts 36 nach innen, muss die in Betrachtungsrichtung linke Führungsbacke 240 einen längeren Stellweg durchlaufen, den es dadurch realisiert, dass der linke Gleitstein 46 um den Betrag von etwa 0,5 mm über dessen Nulllage hinausgehenden Weg auf den Mitnahmestift 48 zu hinbewegen kann und so ganz sicher zur Anlage an die Seitenfläche des Sägeblatts 180 gelangen. Damit ist innerhalb des voraussehbaren Toleranzbereichs eine sichere, gleichmäßige Führung des Sägeblatts 180 gesichert.

## Patentansprüche

1. Hand-Hubsägemaschine (10, 100) mit einem Gehäuse (12, 120) und einem hin- und hergehend antreibbaren, *in eine lösbare Spannposition bringbaren* Sägeblatt (18, 180) sowie mit zangenartigen Führungsmitteln (26, 260), die das Sägeblatt (18, 180) seitlich abstützend führen, **dadurch gekennzeichnet, dass** die Führungsmittel (26, 260) *allein* von Hand wahlweise in eine seitlich zum Sägeblatt (18, 180) beabstandete Position und/*oder in* eine sich seitlich am Sägeblatt (18, 180) abstützende Position schaltbar sind, *wobei die Führungsmittel (26, 260)* die seitlich zum Sägeblatt (18, 180) beabstandete Position einnehmen, *sobald das Sägeblatt (18, 180) seine Spannposition einnimmt. wobei* sich die Führungsmittel (26, 260) in der beabstandeten Position federvorgespannt in die am Sägeblatt (18, 180) abstützende Position zu stellen suchen und durch Betätigen einer an der Hand-Hubsägemaschine (10, 100) angeordneten Drucktaste (52, 520), insbesondere schlagartig, aus ihrer seitlich zum Sägeblatt (18, 180) beabstandeten Position in ihre sich am Sägeblatt (18, 180) abstützende Position gehen.

2. Hand-Hubsägemaschine nach Anspruch 1, **dadurch gekennzeichnet, dass** eine weitere Bedientaste (21, 210) vorgesehen ist, bei deren Betätigung die Führungsmittel (26, 260) *aus ihrer sich seitlich am Sägeblatt (18, 180) abstützenden in ihre seitlich zum Sägeblatt (18, 180) beabstandete Position* stellbar sind.

3. Hand-Hubsägemaschine nach Anspruch 1 oder 2, **dadurch gekennzeichnet, dass** geradgeführte, elastisch vorgespannte Gleitsteine (45, 46) zum Schließen bzw. Öffnen der zangenartigen Führungsmittel (26, 260) vorgesehen sind.

4. Hand-Hubsägemaschine nach einem der Ansprüche 1 bis 3, **dadurch gekennzeichnet, dass** zwei Gleitsteine (45, 46) relativ zueinander verschieblich gelagert sind, wobei der eine Gleitstein (45) den anderen (46) in einer Bewegungsrichtung zwangsweise mitnimmt und in entgegengesetzter Bewegungsrichtung unabhängig vom mitgenommenen Gleitstein zurückbewegbar ist.

5. Hand-Hubsägemaschine nach dem vorhergehenden Anspruch, **dadurch gekennzeichnet, dass** ein Mitnahmemittel (48) zwischen dem ersten Gleitstein (45) und dem zweiten (46) angeordnet ist, wobei in der Position "geschlossen" der Führungszange (26) ein axialer Abstand von etwa 0,5 mm zwischen dem Mitnahmemittel (48) und dem zweiten Gleitstein (46) in Verschieberichtung zur Position "geöffnet" besteht.

6. Hand-Hubsägemaschine nach Anspruch 5, **dadurch gekennzeichnet, dass** der als Betätigungsmittel (21) zum Stellen der Führungszange (26) in die Position "geöffnet" dienende Spannhebel (21) zum Lösen bzw. Einspannen des Sägeblatts (18,180) mit Keilmitteln, insbesondere einer Rampe (50) versehen ist, mit der der Mitnahmestift (48) gemeinsam mit den Gleitsteinen (45) nach unten verstellbar ist.

7. Hand-Hubsägemaschine nach einem der vorhergehenden Ansprüche, **dadurch gekennzeichnet, dass** die Gleitsteine (45, 46) mit Kulissenschlitzen (38, 39) Kulissenbolzen (35, 36) der Führungsbacken (24, 25) der Führungszange (26) so übergreifen, dass sie bei ihrer Bewegung nach unten die Führungszange (26) öffnen und bei ihrer nach oben gerichteten Bewegung die Führungszange (26) schließen.

8. Hand-Hubsägemaschine nach einem der vorhergehenden Ansprüche, **dadurch gekennzeichnet, dass** die Kulissenschlitze (38, 39) unter einem solchen Winkel zu den Kulissenbolzen (35,36) verlaufen, dass nur die Gleitsteine (45, 46) bei ihrer Verschiebung die Kulissenbolzen (35, 36), nicht aber die Kulissenbolzen (35, 36) die Gleitsteine (45, 46) verschieben können.

9. Hand-Hubsägemaschine (10) nach einem der vorhergehenden Ansprüche, **dadurch gekennzeichnet, dass** stirnseitig vor dem Sägeblatt (18) parallel zu diesem sich zur Fußplatte (14) hin ein Fingerschutz (27) erstreckt, der am Gehäuse (12) unverlierbar befestigt ist.

## Claims

1. Hand-operated jigsaw (10, 100) with a housing (12, 120) and a saw blade (18, 180) which can be driven in a manner such that it goes to and fro and *can be brought into a releasable clamping position,* and with tong-like guide means (26, 260) which guide the saw blade (18, 180) in a laterally supporting manner, **characterized in that** the guide means (26, 260) can be switched *simply* by hand either into a position spaced apart laterally from the saw blade (18, 180) and/*or into* a position supported laterally on the saw blade (18, 180), *the guide means (26, 260)* taking up the position spaced apart laterally from the saw blade (18, 180) *as soon as the saw blade (18, 180) takes up its clamping position,* the guide means (26, 260), in the spaced-apart position, attempting to place themselves under spring prestress into the position supported on the saw blade (18, 180) and, by actuation of a pushbutton (52, 520) arranged on the hand-operated jigsaw (10, 100), passing, in particular suddenly, from their position spaced apart laterally from the saw blade (18, 180) into their position supported on the saw blade (18, 180).

2. Hand-operated jigsaw according to Claim 1, **characterized in that** a further operating button (21, 210) is provided, upon the actuation of which the guide means (26, 260) can be placed *from their position supported laterally on the saw blade (18*, *180)* into their *position spaced apart laterally from the saw blade (18, 180).*

3. Hand-operated jigsaw according to Claim 1 or 2, **characterized in that** the elastically prestressed sliding blocks (45, 46) which are guided in a straight line are provided for closing and opening the tong-like guide means (26, 260).

4. Hand-operated jigsaw according to one of Claims 1 to 3, **characterized in that** two sliding blocks (45, 46) are mounted displaceably relative to each other, the one sliding block (45) inevitably carrying along the other (46) in one direction of movement and being movable back in the opposite direction of movement independently of the carried-along sliding block.

5. Hand-operated jigsaw according to one of the preceding claims, **characterized in that** a carry-along means (48) is arranged between the first sliding block (45) and the second sliding block (46), there being, in the "closed" position of the guide tongs (26), an axial distance of approximately 0.5 mm between the carry-along means (48) and the second sliding block (46) in the displacement direction towards the "open" position.

6. Hand-operated jigsaw according to Claim 5, **characterized in that** the clamping lever (21) serving as an actuating means (21) in order to adjust the guide tongs (26) into the "open" position and intended for releasing or clamping the saw blade (18, 180) is provided with wedge means, in particular a ramp (50), with which the carry-along pin (48) can be adjusted downwards together with the sliding blocks (45).

7. Hand-operated jigsaw according to one of the preceding claims, **characterized in that** the sliding blocks (45, 46) engage by means of slotted-guide slots (38, 39) over slotted-guide bolts (35, 36) of the guide jaws (24, 25) of the guide tongs (26) in such a manner that, upon their movement downwards, they open the guide tongs (26) and, upon their movement directed upwards, close the guide tongs (26).

8. Hand-operated jigsaw according to one of the preceding claims, **characterized in that** the slotted-guide slots (38, 39) run at such an angle to the slotted-guide bolts (35, 36) that only the sliding blocks (45, 46), upon being displaced, can displace the slotted-guide bolts (35, 36), but the slotted-guide bolts (35, 36) cannot displace the sliding blocks (45, 46).

9. Hand-operated jigsaw (10) according to one of the preceding claims, **characterized in that** a finger guard (27) which is fastened captively to the housing (12) extends on the end side in front of the saw blade (18) parallel to the latter as far as the base plate (14).

## Revendications

1. Scie sauteuse portative (10, 100) comprenant un boîtier (12, 120) et une lame de scie (18, 180) pouvant être entraînée en va-et-vient et pouvant être amenée dans une position de serrage amovible, ainsi que des moyens de guidage en forme de pince (26, 260) qui guident la lame de scie (18, 180) en s'appuyant latéralement contre celle-ci,
**caractérisée en ce que**
les moyens de guidage (26, 260) peuvent être commutés simplement à la main, au choix dans une position latéralement écartée de la lame de scie (18, 180) et/ou dans une position latéralement appuyée contre la lame de scie (18, 180), sachant que les moyens de guidage (26, 260) adoptent la position latéralement écartée de la lame de scie (18, 180) dès que la lame de scie (18, 180) adopte sa position de serrage, sachant que les moyens de guidage (26, 260), dans la position écartée, cherchent à parvenir, avec une précontrainte élastique, dans la position appuyée contre la lame de scie (18, 180), alors que par l'actionnement d'un bouton-poussoir (52, 520) disposé au niveau de la scie à métaux manuelle (10, 100), en particulier par un actionnement brusque, ils viennent de leur position latéralement écartée de la lame de scie (18, 180) dans leur position appuyée contre la lame de scie (18, 180).

2. Scie sauteuse portative selon la revendication 1,
**caractérisée en ce qu'**
on prévoit un autre bouton de commande (21, 210) dont l'actionnement permet d'amener les moyens de guidage (26, 260) de leur position latéralement appuyée contre la lame de scie (18, 180) dans leur position latéralement écartée de la lame de scie (18, 180).

3. Scie sauteuse portative selon la revendication 1 ou 2,
**caractérisée en ce qu'**
on prévoit des coulisseaux (45, 46) guidés linéairement, précontraints élastiquement, pour fermer ou ouvrir les moyens de guidage en forme de pince (26, 260).

4. Scie sauteuse portative selon l'une des revendications 1 à 3,
**caractérisée en ce que**
deux coulisseaux (45, 46) sont logés de façon mobile l'un par rapport à l'autre, sachant que le premier coulisseau (45) entraîne obligatoirement l'autre (46) dans une direction de mouvement et peut être ramené dans la direction de mouvement opposée indépendamment du coulisseau entraîné.

5. Scie sauteuse portative selon la revendication précédente,
**caractérisée en ce qu'**
un moyen d'entraînement (48) est disposé entre le premier coulisseau (45) et le deuxième (46), avec en position « fermée » de la pince de guidage (26), une distance axiale d'environ 0,5 mm entre le moyen d'entraînement (48) et le deuxième coulisseau (46) dans la direction de déplacement vers la position « ouverte ».

6. Scie sauteuse portative selon la revendication 5,
**caractérisée en ce que**
le levier de serrage (21) servant de moyen d'actionnement (21) pour amener la pince de guidage (26) dans la position « ouverte » pour desserrer ou serrer la lame de scie (18, 180), est pourvu de moyens de calage, en particulier d'une rampe (50), permettant de déplacer vers le bas la tige d'entraînement (48) conjointement avec les coulisseaux (45).

7. Scie sauteuse portative selon l'une des revendications précédentes,
**caractérisée en ce que**
les coulisseaux (45, 46) comportant des fentes de coulissement (38, 39) accrochent des boulons de coulissement (35, 36) des mâchoires de guidage (24, 25) de la pince de guidage (26) de telle sorte que lors de leur mouvement vers le bas, ils ouvrent la pince de guidage (26) et lors de leur mouvement dirigé vers le haut, ils ferment la pince de guidage (26).

8. Scie sauteuse portative selon l'une des revendications précédentes,
**caractérisée en ce que**
les fentes de coulissement (38, 39) s'étendent en formant un certain angle par rapport aux boulons de coulissement (35, 36), de sorte que seuls les coulisseaux (45, 46) lors de leur déplacement, peuvent déplacer les boulons de coulissement (35, 36), mais que les boulons de coulissement (35, 36) ne peuvent pas déplacer les coulisseaux (45, 46).

9. Scie sauteuse portative (10) selon l'une des revendications précédentes,
**caractérisée en ce que**
du côté frontal de la lame de scie (18), parallèlement à celle-ci, une protection pour les doigts (27) s'étend vers la plaque de base (14) en étant fixée de manière imperdable au boîtier (12).
